# FASCICULE DE BREVET EUROPEEN

(11) **EP 3 679 271 B1**
(45) Date de publication et mention de la délivrance du brevet: **18.08.2021**
(21) Numéro de dépôt: 18770068.7
(22) Date de dépôt: 27.08.2018
(51) Int. Cl.: F16H 1/12, F16H 55/22, F16H 55/17, F16H 57/032

(54) **ACTIONNEUR AVEC ROUE A DENTURE AXIALE**
AKTUATOR MIT RAD MIT AXIALER VERZAHNUNG
ACTUATOR WITH WHEEL PROVIDED WITH AXIAL TOOTHING

(30) Priorité: 08.09.2017 FR 1758291
(43) Date de publication de la demande: 15.07.2020
(73) Titulaire: Electricfil Automotive, 01700 Beynost (FR)
(72) Inventeur: ROUSSEL, Laurent, 69800 Saint-Priest (FR); MONAVON, Raphaël, 69003 Lyon (FR)
(74) Mandataire: Cabinet Beau de Loménie
(86) Numéro de dépôt international: PCT/FR2018/052104
(87) Numéro de publication internationale: WO 2019/048753

(56) Documents cités:
- FR-A1- 2 896 054
- US-A1- 2014 260 726
- US-A1- 2017 016 513

## Description

L'invention concerne le domaine des actionneurs pour actionner un organe d'un véhicule automobile terrestre.

Ce type de véhicule doit répondre à des contraintes d'usage bien connues, mais aussi à des contraintes économiques connues qui nécessitent notamment l'utilisation, pour tous les organes du véhicule, de techniques de construction et d'assemblage compatibles avec l'ensemble des contraintes. Notamment, les contraintes de coûts de production sont prises en compte par l'homme du métier lorsqu'il cherche à concevoir des organes pour ces véhicules.

De manière générale, dans ce domaine, les actionneurs envisagés dans l'invention comportent un boîtier qui délimite un volume interne dans lequel sont agencés au moins un moteur électrique et une transmission mécanique interne qui comporte au moins une première roue d'engrenage. La transmission mécanique interne permet de transmettre un mouvement généré par le moteur électrique jusqu'à un organe de sortie de l'actionneur qui va commander le déplacement d'un autre organe du véhicule, associé à cet actionneur. Des exemples d'actionneurs sont décrits dans les documents US-2014/260726 et FR-2.896.054.

Cet organe associé peut par exemple être un organe dit « organe moteur », nécessaire au fonctionnement d'un moteur à combustion interne du véhicule. Dans une application, l'organe moteur peut être un volet de commande du débit d'air dans un circuit d'alimentation en air du moteur à combustion interne du véhicule. Ce volet de commande est généralement appelé « papillon d'admission ». De manière connue, les contraintes de fonctionnement pour les organes moteurs sont relativement sévères, notamment en termes de plage de température de fonctionnement. Toutefois, s'agissant d'un organe agencé du côté de l'admission du moteur à combustion interne, les contraintes de fonctionnement sont relativement moins sévères que pour un organe agencé du côté de l'échappement du moteur à combustion interne.

Dans le domaine des véhicules automobiles terrestres considérés, les autres contraintes, notamment de poids et de coût de production, prises en combinaison, tendent à pousser l'homme du métier à choisir, pour la réalisation du boîtier d'un tel actionneur, les techniques de moulage par injection en matériau polymère thermoplastique. Cette technologie permet d'obtenir, pour des coûts de production maîtrisés, des boîtiers comportant des formes complexes assurant de multiples fonctions secondaires, notamment des fonctions de protection, de fixation, de positionnement de tous les éléments compris dans le volume interne de l'actionneur, dont le moteur électrique et la première roue d'engrenage.

La transmission mécanique interne au boîtier de l'actionneur peut avoir au moins l'une ou l'autre des deux fonctions suivantes : une première fonction de changement d'orientation du mouvement de l'arbre de sortie du moteur électrique, notamment une fonction de renvoi d'angle, et/ou éventuellement une fonction de multiplication/démultiplication de la vitesse du mouvement.

La présence d'un mécanisme de renvoi d'angle peut être importante pour obtenir une configuration générale appropriée de l'actionneur en fonction d'un encombrement total de l'actionneur et en fonction du positionnement spatial possible pour cet actionneur dans l'environnement dans lequel il doit être intégré. Ainsi, dans le cas d'une application pour actionner un organe moteur, l'environnement moteur est généralement très contraint et ne permet pas n'importe quelle orientation, notamment du moteur électrique, par rapport aux autres organes environnants.

Notamment, dans certains cas, il est favorable de prévoir que la première roue d'engrenage présente un axe de rotation perpendiculaire à l'axe de rotation de l'arbre de sortie du moteur électrique de l'actionneur, de manière à former un renvoi d'angle.

Pour former un mécanisme de transmission à renvoi d'angle, l'homme du métier se tourne généralement vers l'utilisation d'un engrenage à deux pignons coniques. Toutefois, le positionnement de deux pignons coniques l'un par rapport à l'autre demande une très grande précision. Or, lorsque le boîtier de l'actionneur est réalisé en matière polymère par moulage par injection, les tolérances de fabrication que l'on peut obtenir pour le boîtier, dans des coûts raisonnables au vu de l'application considérée au domaine des véhicules automobiles terrestres, nécessiterait des précautions et des aménagements particuliers pour permettre un positionnement suffisamment précis du moteur électrique et de la première roue d'engrenage, ou pour compenser une éventuelle imprécision du positionnement relatif. Par exemple, on pourrait prévoir d'augmenter le module des dentures des engrenages pour augmenter la tolérance de tels engrenages à un défaut de positionnement relatif. Toutefois, cela augmenterait le coût, le poids et l'encombrement des pièces.

Pour former un mécanisme de transmission à renvoi d'angle, on peut encore songer à utiliser un engrenage de type roue et vis sans fin. Toutefois, ce type d'engrenage possède un très mauvais rendement mécanique, qui conduit à devoir surdimensionner le moteur électrique, ce qui est désavantageux en termes de poids, de coût, et d'encombrement. Par ailleurs, un engrenage à roue et vis sans fin est généralement irréversible. Pour certaines applications, cela n'est pas acceptable. Par exemple, pour l'application envisagée plus haut à la commande d'un papillon d'admission, il est nécessaire que, en cas de défaillance du moteur électrique, le papillon d'admission soit ramené automatiquement et mécaniquement vers une position prédéterminée, notamment d'ouverture. Ceci est généralement assuré par un ressort de rappel qui peut être intégré à l'actionneur, généralement au niveau de l'organe de sortie de l'actionneur, ou au papillon d'admission. Dans le cas d'un engrenage irréversible, un tel ressort de rappel ne permettrait pas de ramener le volet vers sa position prédéterminée d'ouverture si le moteur électrique se trouvait défaillant en position de fermeture, car l'effort de rappel du ressort ne pourrait lutter contre le caractère irréversible de l'engrenage, lequel serait bloqué par le moteur.

L'invention a donc pour but de proposer une nouvelle conception d'un actionneur pour un organe d'un véhicule automobile terrestre, notamment pour un véhicule ayant un poids à vide de moins de 2,5 tonnes, à la fois compact et économique à produire.

Ainsi, l'invention propose un actionneur pour un organe d'un véhicule automobile terrestre, du type comportant un boitier d'actionneur qui est réalisé par moulage par injection en matériau polymère thermoplastique et qui délimite un volume interne dans lequel sont agencés :
- au moins un moteur électrique ayant un arbre moteur sur lequel est monté un pignon de sortie solidaire en rotation de l'arbre moteur, l'arbre moteur ayant un axe de rotation,
- et une transmission mécanique interne comprenant au moins une première roue d'engrenage, qui présente un axe de rotation perpendiculaire à l'axe de rotation de l'arbre moteur, et qui est engrenée avec le pignon de sortie du moteur électrique pour transmettre un mouvement du pignon de sortie du moteur électrique à un organe de sortie de l'actionneur.

Cet actionneur est caractérisé en ce que la première roue d'engrenage présente une denture, dite axiale, qui est formée de dents d'engrenage ayant une extension pied-tête selon la direction de l'axe de rotation de la première roue d'engrenage, et qui s'engrène avec le pignon de sortie du moteur électrique.

De plus, la première roue d'engrenage est guidée en rotation dans le boîtier avec une laxité en translation selon la direction de son axe de rotation, et l'actionneur comporte au moins un moyen de plaquage élastique qui sollicite la première roue d'engrenage selon la direction de son axe de rotation et qui plaque la denture axiale de la première roue d'engrenage contre le pignon de sortie du moteur électrique.

Selon d'autres caractéristiques optionnelles de l'invention :
- Le moyen de plaquage élastique peut comporter un organe élastique.
- Le moyen de plaquage élastique peut être un moyen de placage dont l'organe élastique délivre une force de rappel axiale, dirigée selon la direction de l'axe de rotation de la première roue d'engrenage.
- L'organe élastique peut être indépendant du boîtier et être interposé entre le boîtier et la première roue d'engrenage.
- L'organe élastique peut être un ressort à fil.
- L'organe élastique peut être un ressort à fil hélicoïdal de traction ou de compression.
- La denture axiale peut être comprise dans une zone annulaire de la première roue d'engrenage qui s'étend, par rapport à l'axe de rotation de la première roue d'engrenage, entre un diamètre intérieur et un diamètre extérieur, et l'organe élastique peut être en appui contre la première roue d'engrenage dans une zone centrale d'appui comprise à l'intérieur du diamètre intérieur.
- La zone centrale d'appui peut être comprise à l'intérieur d'un diamètre central inférieur à la moitié du diamètre intérieur.
- L'organe élastique peut être en appui contre la première roue d'engrenage avec interposition d'au moins une pièce intermédiaire.
- L'actionneur peut comporter une deuxième roue d'engrenage :
   - qui est coaxiale à la première roue d'engrenage ;
   - qui présente une denture cylindrique hélicoïdale formée de dents d'engrenage ayant une extension pied-tête selon des directions perpendiculaires à la direction de l'axe de rotation de la première roue d'engrenage et ayant une extension latérale selon des lignes hélicoïdales enroulées selon un angle d'hélice autour de l'axe de rotation de la première roue d'engrenage ;
   - qui s'engrène avec une troisième roue d'engrenage à denture cylindrique hélicoïdale.

Dans ce cas, on peut avantageusement prévoir que :
- la première et la deuxième roue d'engrenage sont solidaires l'une de l'autre en rotation autour de leur axe commun et en translation selon leur axe commun ;
- la première, la deuxième et la troisième roue d'engrenage appartiennent à une cascade d'engrenage,
- et que l'organe élastique du moyen de placage délivre un effort de rappel angulaire à au moins une roue de ladite cascade d'engrenage autour de l'axe de ladite roue d'engrenage à laquelle l'effort de rappel angulaire est appliqué, le sens de l'effort de rappel et le sens de l'angle d'hélice de la denture de la deuxième roue d'engrenage étant choisis pour que l'effort de rappel angulaire génère, sur la première roue d'engrenage, une force de plaquage axiale en direction du pignon de sortie du moteur électrique.

- L'organe élastique à action angulaire peut être un ressort à fil.
- Le moteur électrique et la première roue d'engrenage peuvent être liés et positionnés chacun de manière indépendante par rapport au boîtier de l'actionneur.

Diverses autres caractéristiques ressortent de la description faite ci-dessous en référence aux dessins annexés qui montrent, à titre d'exemples non limitatifs, des formes de réalisation de l'objet de l'invention.
Les **Figures 1** et **2** sont des vues en perspective d'un exemple de réalisation d'un actionneur pour un organe de véhicule automobile terrestre, conforme aux enseignements de l'invention.
La **Figure 3** est une vue en plan et en transparence des principaux composants d'un tel actionneur à l'intérieur du boîtier de l'actionneur.
Les **Figures 4****,** **5** et **6** sont des vues en coupe, respectivement selon les plans de coupe **A-A, B-B** et **C-C** indiqués sur les **Fig. 3** et **4****.**
La **Figure 7** est une vue en perspective éclatée des principaux composants de l'actionneur illustré sur les **Figs.** précédentes.
La **Figure 8** est une vue identique à celle de la **Fig. 7**, illustrant une variante de réalisation d'un actionneur selon l'invention.
Les **Figures 9, 10** et **11** illustrent des variantes de réalisation pour un organe élastique de placage susceptible d'être utilisé notamment dans le mode de réalisation de la **Fig. 7**.

On a illustré sur les figures un exemple de réalisation d'un actionneur **10** pour un organe d'un véhicule automobile terrestre.

Un tel véhicule est par exemple un véhicule automobile ayant un poids à vide de moins de 2,5 tonnes, le poids à vide étant défini au sens de l'article R312-1 du code de la route français comme « la masse d'un véhicule en ordre de marche comprenant le châssis avec les accumulateurs et le réservoir d'eau rempli, les réservoirs à carburant ou les gazogènes remplis, la carrosserie, les équipements normaux, les roues et les pneus de rechange et l'outillage courant normalement livrés avec le véhicule ».

L'actionneur **10** est destiné à mettre en mouvement un organe, non représenté, du véhicule. Dans une application, cet organe est par exemple un papillon d'admission pour un moteur à combustion interne du véhicule. Dans une autre application, cet organe peut être un organe de verrouillage de la transmission du véhicule qui transmet le mouvement généré par un moteur du véhicule aux roues motrices du véhicule, cet organe verrouillage étant couramment appelé « park lock ».

L'actionneur **10** comporte un boitier d'actionneur **12** qui est réalisé par moulage par injection en matériau polymère thermoplastique, par exemple en polyamide, en polyéthylène, polypropylène, polyester, ABS, ....

Le matériau polymère thermoplastique désigne un matériau présentant une rigidité suffisante, pour une gamme de températures ambiantes, correspondant aux températures de l'atmosphère ambiante dans les conditions normales d'utilisation, cette gamme de températures ambiantes étant inférieure à la température de ramollissement Vicat du matériau. La rigidité suffisante correspond à une absence de déformation notable dans les conditions normales d'utilisation. Le matériau polymère thermoplastique présente un état plastique malléable dans une plage de température intermédiaire de formage, supérieure à la température de ramollissement Vicat du matériau, ceci de manière réversible. Un tel matériau retrouve sa rigidité initiale lorsque le matériau est ramené dans la gamme de températures ambiantes, en-dessous de la température de ramollissement Vicat du matériau, mais peut de nouveau être amené, au moins une seconde fois, dans son état plastique malléable en étant amené de nouveau dans la plage de température intermédiaire de formage, au-dessus de la température de ramollissement Vicat du matériau.

Un tel matériau n'est donc pas thermiquement dégradé de manière significative lorsqu'il est amené dans la plage de température intermédiaire de formage. Avec un tel matériau, les contraintes mécaniques de cisaillement introduites par un procédé de mise en forme ne modifient pas significativement la structure moléculaire du matériau lorsque la mise en forme est effectuée dans cette plage intermédiaire de formage.

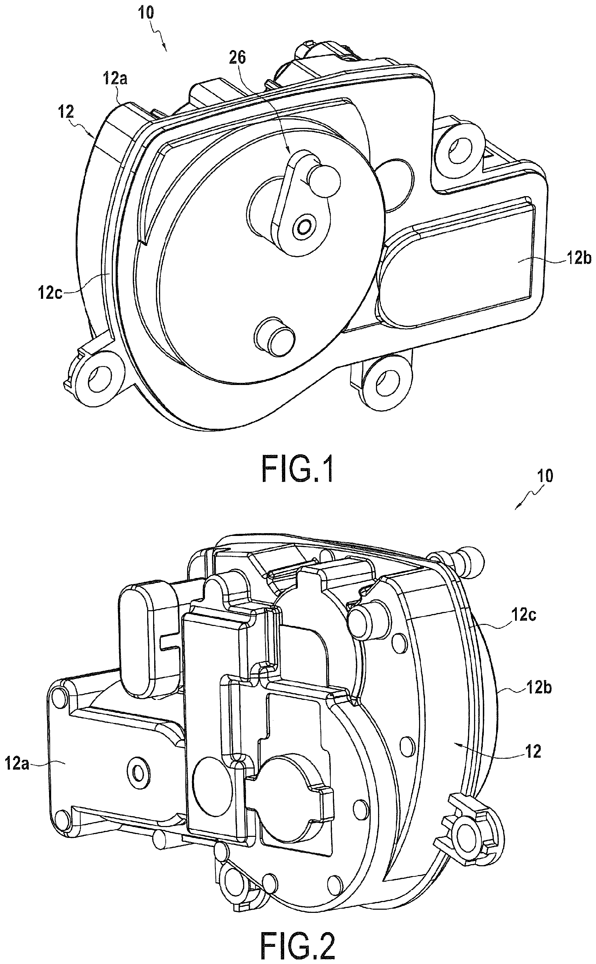

Le matériau polymère thermoplastique peut être chargé en éléments de renfort, par exemple en billes ou en fibres de verre. Le boîtier d'actionneur **12** est généralement formé de plusieurs pièces, généralement au moins deux pièces distinctes qui sont assemblées l'une à l'autre, par exemple par emboîtage élastique et/ou par des attaches complémentaires telles que des vis, des agrafes amovibles ou des rivets. Dans l'exemple illustré, le boîtier d'actionneur **12** comporte deux parties distinctes, à savoir une partie arrière **12a** et une partie avant **12b**. Les notions « avant » et « arrière » sont employées ici de manière purement arbitraire en référence aux **Figs. 1** et **2****.** Dans l'exemple illustré, ces deux parties sont assemblées l'une à l'autre le long d'un bord périphérique commun **12c** qui, dans cet exemple mais de manière non obligatoire, est contenu dans un plan principal de l'actionneur.

Le boîtier **12** de l'actionneur **10**, obtenu par moulage par injection en matériau polymère thermoplastique, peut présenter des écarts géométriques par rapport à une géométrie théorique. Ces écarts géométriques se traduisent par des intervalles de tolérance, pour les dimensions habituelles pour ce type pièces, qui sont supérieurs à 0,1 millimètre. Ces écarts géométriques peuvent notamment être dus à la technique de réalisation par moulage par injection qui peut générer, notamment lors du refroidissement des pièces constitutives du boîtier **12**, des déformations non maîtrisées de la pièce. Bien entendu, les techniques de moulage par injection en matériau polymère thermoplastique peuvent permettre d'obtenir des écarts géométriques plus faibles, mais souvent au prix d'une plus grande complexité de réalisation, donc souvent à un coût économique supérieur. Un des avantages de l'invention est de permettre la réalisation d'un actionneur dont le boîtier peut être réalisé par moulage par injection de matériau polymère thermoplastique, à faible coût, tout en garantissant un fonctionnement satisfaisant de l'actionneur, dans les contraintes opératoires et avec la longévité requise dans le cadre des applications considérées.

Le boîtier d'actionneur **12** délimite un volume interne. Dans l'exemple illustré, le volume interne, défini entre les deux parties arrière **12a** et avant **12b**, est un volume fermé, sans ouverture. De préférence, mais de manière non obligatoire, ce volume interne est fermé de manière étanche à l'eau par le boîtier **12**.

De manière connue, à l'intérieur de ce volume interne, l'actionneur comporte au moins un moteur électrique **16** et une transmission mécanique interne **18** qui, dans l'exemple illustré sur les figures, comporte une cascade de pignons. Le moteur électrique **16** est fixé directement ou indirectement dans le boîtier **12**, en l'occurrence dans un logement formé par des cloisons venues de matière avec la partie arrière **12a** du boîtier **12**. Éventuellement, la fixation du moteur électrique **16** se fait par emboîtement élastique dans des éléments correspondants venus de matière lors du moulage par injection en matériau polymère thermoplastique de la partie correspondante du boîtier **12**.

Le moteur électrique **16** présente un arbre moteur **20** sur lequel est monté un pignon de sortie **22** solidaire en rotation de l'arbre moteur, l'arbre moteur **20** ayant un axe de rotation **A1.** Dans l'exemple illustré, l'axe de rotation **A1** de l'arbre moteur **20** s'étend parallèlement au plan principal du boîtier **12** de l'actionneur **10**. Le moteur électrique **16** peut être de tout type conventionnellement utilisé. Bien entendu, l'actionneur **10** comporte avantageusement un raccord électrique d'alimentation du moteur **16** et de préférence un raccord de commande qui permet de commander ce moteur électrique en le reliant à une circuit électronique de commande. On note qu'une partie du circuit électronique de commande peut être comprise à l'intérieur du boîtier **12** de l'actionneur **10**.

La transmission mécanique interne **18** comprend au moins une première roue d'engrenage **24**, qui présente un axe de rotation **A2** perpendiculaire à l'axe de rotation **A1** de l'arbre moteur **20**, et qui est engrenée avec le pignon de sortie **22** du moteur électrique pour transmettre, directement ou de préférence indirectement comme dans l'exemple qui va être décrit, un mouvement du pignon de sortie **22** du moteur **20** à un organe de sortie **26** de l'actionneur **10**.

Dans l'exemple illustré, l'axe de rotation **A2** de la première roue d'engrenage **24** est perpendiculaire au plan principal du boîtier **12** de l'actionneur, de sorte que la roue **24** en elle-même présente un contour circulaire qui s'étend dans le plan principal de l'actionneur **10**, ou dans un plan parallèle à celui-ci, tout comme le moteur électrique **16**. En d'autres termes, la première roue d'engrenage **24** et le moteur électrique **16** présentent pour l'essentiel un encombrement maximal dans ce plan, par rapport à leur encombrement selon une direction perpendiculaire à ce plan.

Dans l'exemple illustré, l'organe de sortie **26** de l'actionneur est une manivelle qui s'étend moins en partie à l'extérieur du volume interne et qui est destinée à commander, directement ou indirectement, un organe du véhicule.

Le mouvement de l'organe de sortie **26** de l'actionneur **10** peut être, comme dans l'exemple illustré, un mouvement rotatif, ici d'axe de rotation **A3**, ou il peut être un mouvement de translation, ou encore tout autre mouvement, y compris une combinaison de mouvements. Dans l'exemple illustré, le mouvement rotatif de l'organe de sortie **26** est limité à une plage angulaire inférieure à 360°, voir même inférieure à 180° d'angle autour de l'axe de rotation **A3** de l'organe de sortie **26**. Cependant, la plage angulaire du mouvement pourrait être supérieure à 360°, voire non limitée. Dans l'exemple illustré, l'organe de sortie **26** est une manivelle qui est destinée à être reliée à l'organe à actionner par un mécanisme de transmission externe à l'actionneur, par exemple une tringlerie, comportant par exemple au moins une biellette. Cependant, l'invention n'est pas limitée à une telle implémentation. On peut aussi prévoir un actionnement direct de l'organe à actionner par l'organe de sortie **26** de l'actionneur.

Selon un aspect de l'invention, la première roue d'engrenage **24** présente une denture **28**, dite axiale, qui est formée de dents d'engrenage ayant une extension pied-tête selon la direction de l'axe de rotation **A2** de la première roue d'engrenage **24,** et qui s'engrène avec le pignon de sortie **22** du moteur électrique **16.** On comprend donc que la denture **28**, prise dans sa globalité, s'étend selon un anneau autour de l'axe de rotation **A2** de la première roue d'engrenage **24.** La denture **28** présente donc une largeur correspondant à l'étendue des dents de la denture **28** selon une direction radiale par rapport à l'axe de rotation **A2.** Ainsi, la denture axiale **28** est comprise dans une zone annulaire de la première roue d'engrenage **24** qui s'étend, par rapport à l'axe de rotation **A2** de la première roue d'engrenage **24,** entre un diamètre intérieur « **Dint** » et un diamètre extérieur « **Dext** ». Une telle roue d'engrenage est parfois appelée en anglais « contrate gear » ou « face gear ». Dans l'exemple illustré, la première roue d'engrenage **24** se présente donc comme un disque dont l'axe est l'axe de rotation **A2.** Ce disque comporte au moins une face latérale, ici une face latérale avant, perpendiculaire ou sensiblement perpendiculaire à l'axe de rotation **A2**, depuis laquelle chaque dent d'engrenage présente son extension allant de son pied à sa tête selon la direction de l'axe de rotation **A2**.

Dans l'exemple illustré, l'axe de rotation **A2** de la première roue d'engrenage **24** est non seulement perpendiculaire, mais aussi concourant avec l'axe **A1** de l'arbre moteur **20** du moteur électrique **16.** Ainsi, ces deux axes de rotation déterminent un plan. Dans l'exemple illustré, ce plan est parallèle au plan principal du boîtier **12** de l'actionneur **10**, distinct ou non de ce plan.

Dans le cadre de l'application envisagée, l'utilisation d'une première roue d'engrenage **24** à denture axiale **28** permet de former, avec le pignon de sortie **22**, une transmission à renvoi d'angle, en l'occurrence un renvoi d'angle à 90°, entre l'arbre moteur **20** et l'axe de rotation **A3** de la première roue d'engrenage **24.** Cette transmission à renvoi d'angle présente un bon rendement mécanique, généralement supérieur à 80 %.

L'utilisation d'une première roue d'engrenage **24** à denture axiale **28** permet par ailleurs d'avoir une transmission à renvoi d'angle réversible. Ainsi, si lorsque le moteur électrique **16** délivre un couple moteur à son pignon de sortie **22**, la transmission à renvoi d'angle permet de transmettre le couple moteur au travers de la première roue d'engrenage **24** vers une partie aval de la transmission mécanique interne **18**. Inversement, si un couple moteur est appliqué, directement ou indirectement, sur la première roue d'engrenage **24,** par exemple une force de rappel élastique, la transmission à renvoi d'angle permet, en l'absence de blocage électrique ou mécanique du moteur, de faire tourner l'arbre moteur **20** du moteur électrique **16** sans que celui-ci ne bloque le mouvement.

Comme on peut le voir sur les figures, le pignon de sortie **22** du moteur électrique **16** peut être un pignon cylindrique à denture droite. Un tel pignon présente une denture formée de dents d'engrenage ayant une extension pied-tête selon des directions radiales, perpendiculaires à la direction de l'axe de rotation **A3** de l'arbre **20** du moteur électrique **16**, et ayant une extension latérale selon des lignes droites parallèles à ce même axe de rotation **A3**.

Dans l'exemple illustré, l'engrènement entre le pignon de sortie **22** du moteur électrique **16** et la première roue d'engrenage **24** génère, par les différences de diamètre primitif entre le pignon de sortie **22** et la première roue d'engrenage **24,** une démultiplication de la vitesse de l'arbre de sortie **20** du moteur. Ainsi, la première roue d'engrenage **24** tourne à une vitesse de rotation qui est par exemple inférieure à la moitié de celle du pignon de sortie **22** du moteur électrique **16**, de préférence inférieure au quart de la vitesse de rotation du pignon de sortie **22** du moteur électrique **16.**

On remarque que la première roue d'engrenage **24** est guidée en rotation dans le boîtier autour de son axe de rotation **A2.** En l'occurrence, la première roue d'engrenage **24** est portée par un arbre **30** coaxial avec la première roue d'engrenage **24.** L'arbre **30** est ici réalisé sous la forme d'une pièce distincte de la première roue d'engrenage **24,** mais on pourrait envisager que l'arbre **30** et la première roue d'engrenage **24** soient réalisés en une seule pièce, par exemple par moulage. Les deux extrémités axiales de l'arbre **30**, de part et d'autre de la première roue d'engrenage **24,** sont chacune guidées à rotation dans des logements correspondants, aménagés respectivement dans la partie arrière **12a** et dans la partie avant **12b** du boîtier **12.** On note ainsi que, dans ce mode de réalisation, le moteur électrique **16** de l'actionneur **10** et la première roue d'engrenage **24** sont liés et positionnés chacun de manière indépendante par rapport au boîtier **12** de l'actionneur **10.**

Dans l'exemple illustré, la première roue d'engrenage **24** est montée dans le boîtier **12** avec une laxité en translation, ou jeu mécanique, selon la direction de son axe de rotation **A2.** Cette laxité en translation selon la direction de son axe, permise par les moyens de guidage, est de préférence d'au moins 0,1 millimètre. Elle sera généralement comprise entre 0,1 et 1 millimètre, mais pourra dans certains cas dépasser 1 millimètre.

En contrepartie de cette laxité axiale du montage de la première roue d'engrenage **24,** on peut prévoir, comme dans les exemples illustrés, que l'actionneur **10** comporte au moins un moyen de plaquage élastique qui sollicite la première roue d'engrenage **24** selon la direction de son axe de rotation **A2** et qui plaque la denture axiale **28** de cette première roue d'engrenage **24** contre le pignon de sortie **22** du moteur électrique **16**, assurant ainsi un engrènement optimal entre le pignon de sortie **22** du moteur électrique **16** et la première roue d'engrenage **24.**

Les moyens de plaquage élastique peuvent prendre différentes formes. Pour ceux qui seront décrits ci-après, le moyen de plaquage élastique comporte de préférence un organe élastique.

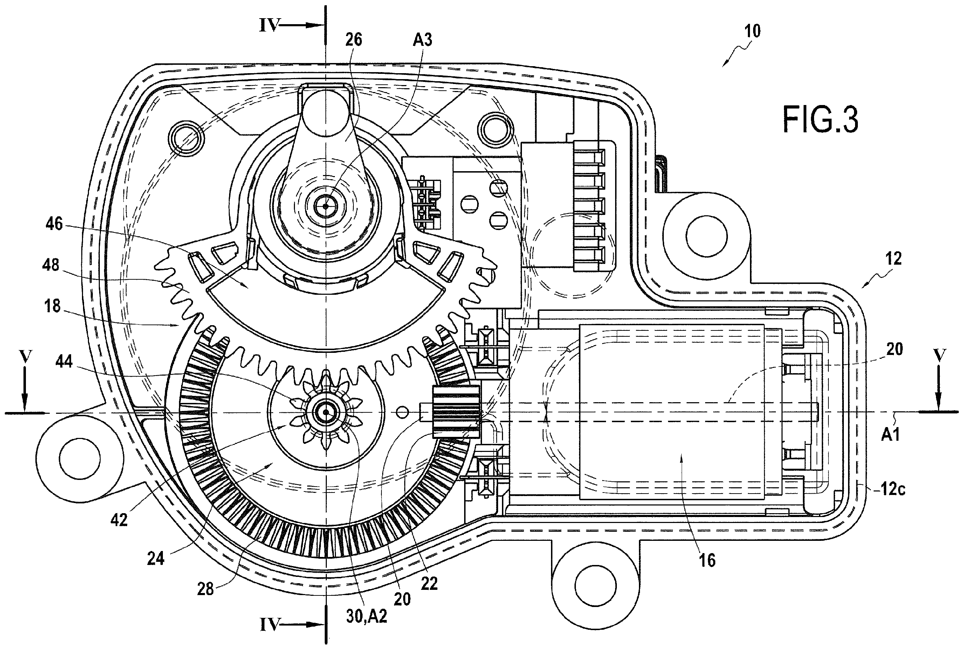

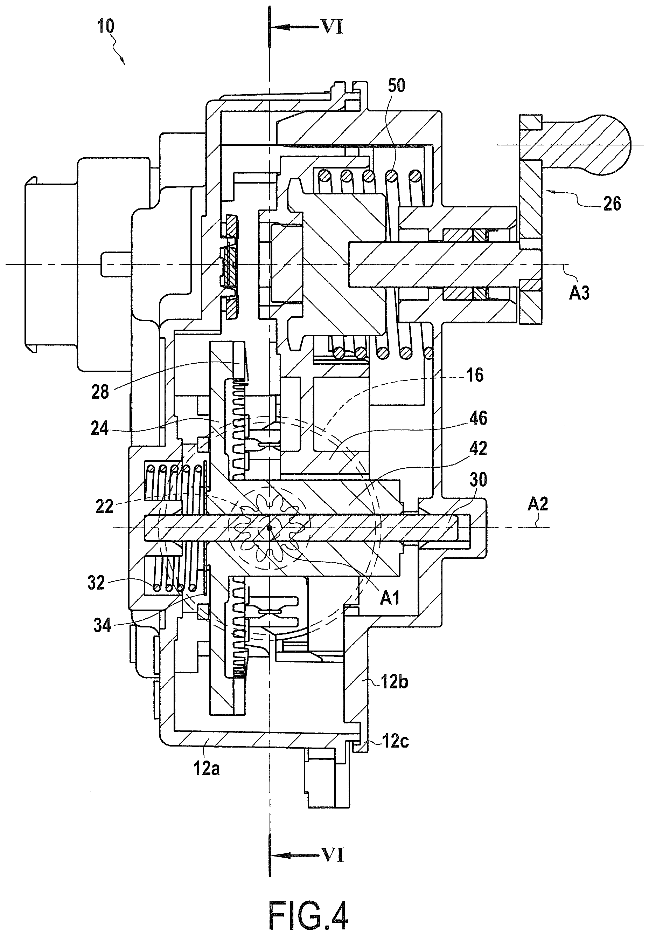

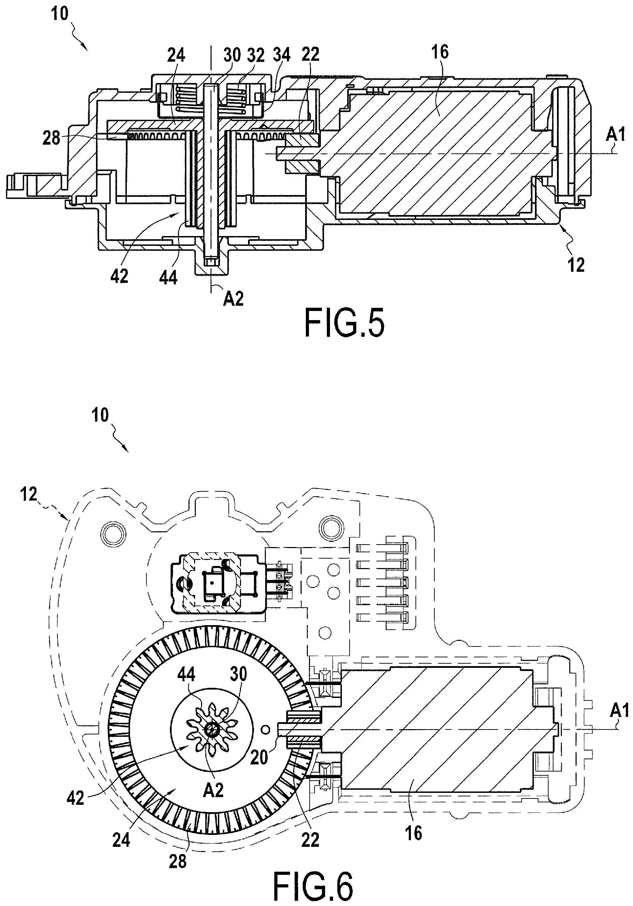

Dans un premier mode de réalisation illustré sur les **Figs. 3** à **7**, le moyen de plaquage élastique est un moyen de placage dont l'organe élastique, à action axiale, délivre une force de rappel axiale, dirigée selon la direction de l'axe de rotation **A2** de la première roue d'engrenage **24,** cette force étant appliquée directement ou indirectement sur la première roue d'engrenage **24.**

Dans ce mode de réalisation, l'organe élastique peut être indépendant du boîtier **12** et être interposé entre le boîtier **12** et la première roue d'engrenage **24.** Cependant, dans une variante, on peut aussi prévoir que l'organe élastique soit réalisé venu de matière avec au moins une partie du boîtier **12**, lors de l'opération de moulage par injection.

Typiquement, l'organe élastique peut être un ressort à fil, notamment à fil métallique. Comme dans l'exemple illustré aux **Figs. 3** à **7**, il peut s'agir d'un ressort à fil hélicoïdal de compression **32**. On note cependant que l'on pourrait réaliser un actionneur dans lequel le moyen de plaquage comporte un ressort de traction délivrant lui aussi une force de rappel axiale selon l'axe de rotation **A2** de la première roue d'engrenage **24**.

Dans l'exemple illustré, l'organe élastique **32** est en forme de ressort à fil hélicoïdal de compression et il est agencé entre une paroi de fond de la partie arrière **12a** du boîtier **12** et une face latérale arrière de la première roue d'engrenage **24**, opposée à la face avant sur laquelle est formée la denture axiale **28** de la première roue d'engrenage **24**.

Dans l'exemple illustré, l'organe élastique **32** exerce une force de rappel élastique qui est non seulement parallèle à l'axe de rotation **A2** de la première roue d'engrenage **24**, mais qui est en plus dirigée selon cet axe de rotation **A2**. En d'autres termes, la force de rappel élastique appliquée par l'organe élastique sur la première roue d'engrenage **24** est centrée par rapport à la première roue d'engrenage **24**.

Dans l'exemple illustré, l'organe élastique exerce sa force de rappel élastique sur la première roue d'engrenage **24** par contact avec celle-ci dans une zone centrale de celle-ci. Comme l'organe élastique **32** peut être en contact de manière directe ou indirecte avec la première roue d'engrenage, on s'intéresse ici au contact entre d'une part la première roue d'engrenage **24** ou une pièce qui est liée en rotation avec celle-ci, et d'autre part l'organe élastique **32** qui est considéré comme ne tournant pas par rapport au boîtier **12**.

Dans l'exemple illustré, l'organe élastique **32** est en appui contre la première roue d'engrenage dans une zone centrale comprise à l'intérieur du diamètre intérieur « **Dint** » délimitant la zone annulaire de la première roue d'engrenage **24** dans laquelle la denture axiale **28** est comprise. De préférence, cette zone centrale dans laquelle s'effectue l'appui est comprise à l'intérieur d'un diamètre central inférieur à la moitié du diamètre intérieur « **Dint** ». Cela permet de minimiser les effets du frottement, au bénéfice d'un meilleur rendement.

L'organe élastique **32** est de préférence en appui contre la première roue d'engrenage **24** avec interposition d'au moins une pièce intermédiaire **34**. Dans l'exemple illustré, cette pièce intermédiaire est tout simplement une rondelle **34**. La pièce intermédiaire est de préférence une pièce métallique et/ou une pièce revêtue de matériau à faible coefficient de frottement tel qu'un matériau à base de polytétrafluoroéthylène (PTFE), pour réduire le frottement. La pièce intermédiaire est par exemple solidaire de la première roue d'engrenage en rotation autour de l'axe **A2**.

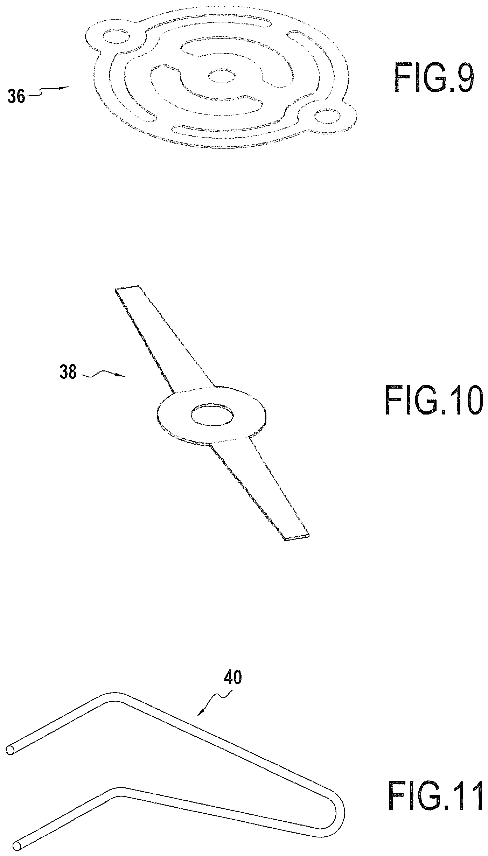

On note que l'organe élastique **32** peut prendre d'autres formes. Notamment, on a illustré sur les **Figs. 9** à **11** un ressort à plaque ajourée **36**, une rondelle à branches radiales élastiques **38**, ou un ressort à fil conformé en épingle **40** dont les branches sont coudées, qui tous les trois peuvent être utilisés à la place ou en complément du ressort de compression à fil hélicoïdal **32**. De telles variantes peuvent permettre de réduire le coût de réalisation de la fonction.

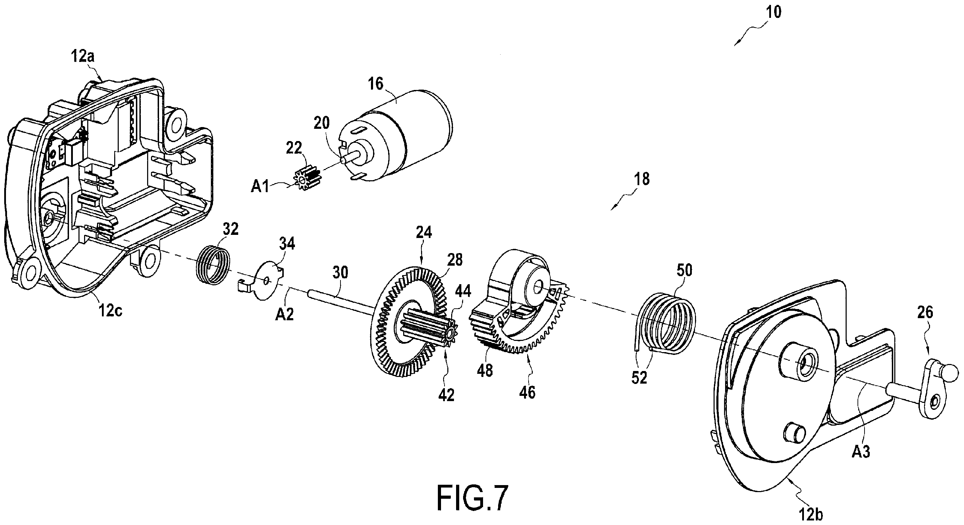

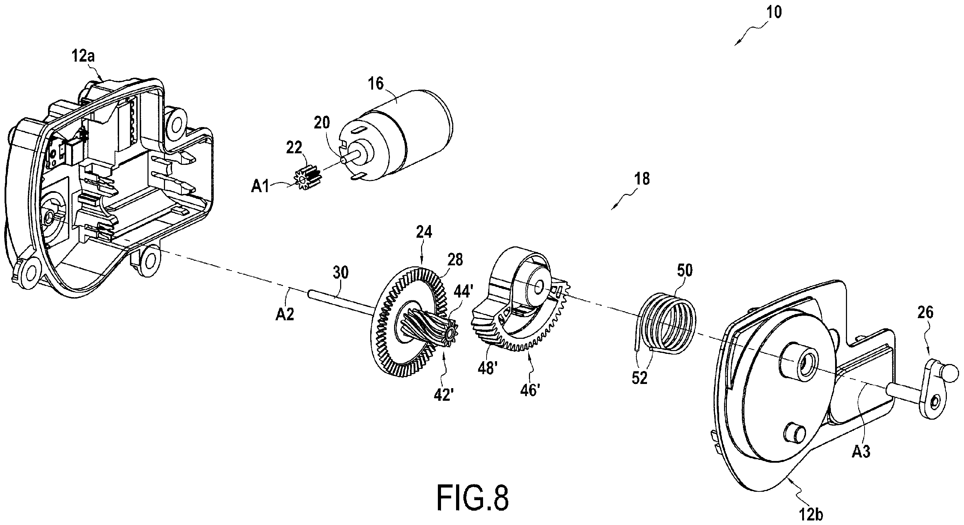

Dans les deux modes de réalisation illustrés aux **Figs. 7** et **8** l'actionneur comporte une deuxième roue d'engrenage **42**, **42'** :
- qui est coaxiale à la première roue d'engrenage **24** ; et
- qui présente une denture **44**, **44'** formée de dents d'engrenage ayant une extension pied-tête selon des directions perpendiculaires à la direction de l'axe de rotation **A2** de la première roue d'engrenage **24.**

Dans les deux cas, la deuxième roue d'engrenage **42**, **42'** s'engrène avec une troisième roue d'engrenage **46**, **46'**, de sorte que la deuxième et la troisième roue d'engrenage appartiennent à la cascade d'engrenage de la transmission mécanique interne **18**.

Dans les exemples illustrés, la troisième roue d'engrenage **46**, **46'** présente un axe de rotation **A3** qui est parallèle à l'axe de rotation **A2** de la première roue d'engrenage, et distinct de celui-ci. De manière particulière à ces modes de réalisation, dont la plage angulaire de rotation de l'organe de sortie est inférieure à 360°, la troisième roue d'engrenage **46**, **46'** présente une denture qui s'étend sur moins de 360° d'angle.

Dans les deux cas, la première roue d'engrenage **42**, **42'** et la deuxième roue d'engrenage **46**, **46'** sont solidaires l'une de l'autre en rotation autour de leur axe commun de rotation **A2**, et solidaires l'une de l'autre en translation selon de leur axe commun de rotation **A2**. La première roue d'engrenage **42**, **42'** et la deuxième roue d'engrenage **46**, **46'** peuvent être réalisées en une seule pièce, comme dans les exemples illustrés, ou sous la forme de pièces distinctes liées l'une à l'autre.

L'exemple de réalisation qui est illustré à la **Fig. 8** est identique en tous points à celui de la **Fig. 7**, sauf pour ce qui concerne les dentures de la deuxième roue d'engrenage et de la troisième roue d'engrenage et sauf pour l'absence, dans le mode de réalisation de la **Fig. 8**, du moyen de placage **32**, **34**, de la **Fig. 7**, dont l'organe élastique délivre une force de rappel axiale. Ainsi, le mode de réalisation de la **Fig. 8** ne comporte pas le ressort axial **32**, ni la pièce intermédiaire d'appui **34**.

Dans le mode de réalisation de la **Fig. 7**, la denture **44** de la deuxième roue d'engrenage **42** est une denture cylindrique droite. Ainsi, les dents d'engrenage présentent une extension latérale selon une ligne droite parallèle à l'axe de rotation **A2** de la première roue d'engrenage. La deuxième roue d'engrenage **42** s'engrène avec une troisième roue d'engrenage **46**, elle aussi à denture cylindrique droite **48**. On remarque que la deuxième roue d'engrenage **42** présente une extension latérale supérieure à celle de la troisième roue d'engrenage **46**. On comprend que cela permet un engrenage optimal en dépit de toute incertitude, selon la direction axiale, de la position relative de la deuxième et de la troisième roue d'engrenage. Cela permet donc de bénéficier de la laxité axiale du positionnement de la première roue, sans remettre en cause l'engrènement avec la troisième roue d'engrenage. On comprend que, dans ce mode de réalisation, l'engrènement de la deuxième roue d'engrenage **42** avec la troisième roue d'engrenage **46** ne génère pas d'effort selon la direction de leur axe de rotation commun **A2**.

Dans le mode de réalisation de la **Fig. 8**, la denture **44'** de la deuxième roue d'engrenage **42'** est une denture cylindrique hélicoïdale ayant une extension latérale selon des lignes hélicoïdales enroulées selon un angle d'hélice autour de l'axe de rotation **A2** de la première roue d'engrenage **24.** La deuxième roue d'engrenage **42'** s'engrène avec une troisième roue d'engrenage **46'** qui présente elle aussi une denture cylindrique hélicoïdale **48'** correspondante. On comprend que, dans ce mode de réalisation, l'engrènement de la deuxième roue d'engrenage **42'** avec la troisième roue d'engrenage **46'** génère une force selon la direction de leur axes de rotation respectifs **A2**, **A3**, force qui est proportionnelle au couple transmis au travers de l'engrenage des deux roues. L'angle d'hélice, qui est l'angle aigu de la tangente à l'hélice avec la droite génératrice du cylindre portant l'hélice, est de préférence inférieur à 45°, de préférence compris entre 10° et 45°, de préférence entre 15° et 30° (l'angle d'hélice vaut 0° pour un engrenage cylindrique droit).

Le couple transmis au travers de l'engrenage de la deuxième roue d'engrenage **42'** avec la troisième roue d'engrenage **46'** peut résulter d'une part d'un couple moteur appliqué par le moteur électrique sur la première roue d'engrenage **24.** Ce couple peut aussi résulter de tout couple moteur ou résistant qui s'applique sur la cascade d'engrenage. Ce couple qui s'applique sur la cascade d'engrenage peut s'appliquer directement sur une des roues d'engrenage de la cascade d'engrenage, ou indirectement, par exemple sur un mécanisme de transmission externe à l'actionneur reliant l'organe de sortie **26** à l'organe à actionner, ou encore sur l'organe à actionner lui-même.

Dans le mode de réalisation de la **Fig. 8**, tout comme dans celui de la **Fig. 7**, un organe élastique **50** délivre un effort de rappel angulaire directement ou indirectement à au moins une roue d'engrenage de ladite cascade d'engrenage, par exemple à la troisième roue d'engrenage **46'**. Cet effort de rappel s'exerce autour de l'axe de rotation **A3** de ladite roue d'engrenage à laquelle l'effort de rappel angulaire est appliqué.

Dans l'exemple illustré, cet organe élastique est un ressort à action angulaire **50**. Il est ici réalisé sous la forme d'un fil hélicoïdal, par exemple en matériau métallique. Le ressort à action angulaire présente un premier bras d'appui **52**, destiné par exemple à venir en appui contre une surface adéquate du boîtier **12**, et un second bras d'appui **52**, destiné par exemple à venir en appui contre une surface adéquate de la troisième roue d'engrenage **46'**. Dans l'exemple, chaque bras d'appui s'étend avec une composante radiale par rapport à l'axe de rotation **A3** de la roue d'engrange concernée, chacun à une extrémité du fil hélicoïdal.

Dans les deux modes de réalisation des **Fig. 7** et **Figs. 8**, la première fonction de cet organe élastique **50** est de ramener l'actionneur, et donc l'organe à actionner, dans une position prédéterminée en l'absence de toute commande positive du moteur. Ainsi, même en cas de défaillance du moteur ou de son alimentation électrique, l'organe élastique **50** ramène l'ensemble dans un état prédéterminé. Ce retour à la position prédéterminée est permis par le caractère réversible de l'engrenage entre la première roue d'engrenage **24** et le pignon de sortie **22** du moteur électrique **16**. Bien entendu, on veille alors à ce que l'ensemble de la transmission mécanique interne **18**, dont la cascade de roues d'engrenage **24**, **42**, **42'**, **46**, **46'**, soit aussi réversible. Notamment, en cas d'engrenages hélicoïdaux, on choisit de préférence un angle d'hélice inférieur à 45°.

Cependant, dans l'exemple de la **Fig. 8**, l'organe élastique **50** de rappel vers la position prédéterminée sert aussi d'organe élastique de placage, en ce sens que l'effort élastique généré par cet organe élastique **50**, bien qu'étant angulaire, induit, par la présence de l'engrenage hélicoïdal entre la deuxième roue d'engrenage **42'** et la troisième roue d'engrenage **46'**, une force axiale selon la direction de leur axes de rotation respectifs **A2**, **A3**. La force axiale ainsi exercée sur la seconde roue d'engrenage **42'**, se répercute directement sur la première roue d'engrange **24** qui lui est liée en translation selon leur axe commun de rotation **A2**. Cette force axiale est utilisée en tant que force de placage de la première roue d'engrenage **24** contre le pignon de sortie **22** du moteur électrique **16**.

Bien entendu, il est nécessaire de choisir le sens de l'effort de rappel généré par l'organe élastique **50** et le sens de l'angle d'hélice de la denture **44'** de la deuxième roue d'engrenage **42'**, pour que l'effort de rappel angulaire génère, sur la première roue d'engrenage **24**, une force de plaquage axiale en direction du pignon de sortie **22** du moteur électrique **16**, et non pas en sens inverse. Ceci sera aisément déterminé par l'homme du métier.

Ce mode de réalisation présente l'avantage que la force de placage qui est imposée à la première roue d'engrenage **24** est une fonction croissante du couple qui est transmis à un instant donné au travers de la transmission mécanique interne **18**. Cette force de placage, qui n'est pas fixe, est donc adaptée automatiquement et à tout moment aux conditions de fonctionnement de l'actionneur.

Dans le mode de réalisation de la **Fig. 8**, l'actionneur comporte un unique moyen de placage de la première roue d'engrenage **24** sur le pignon de sortie **22** du moteur, ce moyen étant celui comprenant l'organe élastique à action angulaire **50**.

On note cependant que l'on pourrait réaliser un actionneur comportant deux moyens de placage, un premier étant du type à organe élastique à action axiale, identique ou similaire à celui de la **Fig. 7**, et un deuxième étant du type à organe élastique à action angulaire, identique ou similaire à celui de la **Fig. 8**. Le premier serait notamment utile dans les conditions de faible couple transmis au travers de la transmission mécanique interne **18**. Son calibrage pourrait être inférieur à celui de la **Fig. 7**, dans lequel il est le seul moyen de placage. Ainsi, avec deux moyens de placage, un ressort à action axiale **34** de plus faible raideur pourrait être utilisé pour le premier moyen de placage, engendrant notamment moins de pertes par frottement. Le deuxième moyen de placage interviendrait de manière plus prépondérante pour les niveaux de couples transmis supérieurs.

L'invention n'est pas limitée aux exemples décrits et représentés car diverses modifications peuvent y être apportées sans sortir de son cadre.

## Revendications

1. Actionneur pour un organe d'un véhicule automobile terrestre, du type comportant un boitier d'actionneur (**12**) qui délimite un volume interne dans lequel sont agencés :
- au moins un moteur électrique (**16**) ayant un arbre moteur (**20**) sur lequel est monté un pignon de sortie (**22**) solidaire en rotation de l'arbre moteur, l'arbre moteur ayant un axe de rotation (**A1**),
- et une transmission mécanique interne (**18**) comprenant au moins une première roue d'engrenage (**24**), qui présente un axe de rotation (**A2**) perpendiculaire à l'axe de rotation (**A1**) de l'arbre moteur (**20**), et qui est engrenée avec le pignon de sortie (**22**) du moteur électrique (**16**) pour transmettre un mouvement du pignon de sortie (**22**) du moteur électrique (**16**) à un organe de sortie (**26**) de l'actionneur (**10**),
la première roue d'engrenage (**24**) présentant une denture (**28**), dite axiale, qui est formée de dents d'engrenage ayant une extension pied-tête selon la direction de l'axe de rotation (**A2**) de la première roue d'engrenage (**24**), et qui s'engrène avec le pignon de sortie (**22**) du moteur électrique (**16**), **caractérisé en ce que** le boitier d'actionneur (**12**) est réalisé par moulage par injection en matériau polymère thermoplastique, **en ce que** la première roue d'engrenage (**24**) est guidée en rotation dans le boîtier (**12**) avec une laxité en translation selon la direction de son axe de rotation (**A2**), et **en ce que** l'actionneur (**10**) comporte au moins un moyen de plaquage élastique (**32**, **36**, **38**, **40**, **50**, **44'**, **48'**) qui sollicite la première roue d'engrenage (**24**) selon la direction de son axe de rotation (**A2**) et qui plaque la denture axiale (**28**) de la première roue d'engrenage (**24**) contre le pignon de sortie (**22**) du moteur électrique (**16**).

2. Actionneur selon la revendication **1**, **caractérisé en ce que** le moyen de plaquage élastique comporte un organe élastique (**32**, **36**, **38**, **40**, **50**).

3. Actionneur selon la revendication **2**, **caractérisé en ce que** le moyen de plaquage élastique est un moyen de placage dont l'organe élastique (**32**, **36**, **38**, **40**) délivre une force de rappel axiale, dirigée selon la direction de l'axe de rotation (**A2**) de la première roue d'engrenage (**24**).

4. Actionneur selon la revendication **3**, **caractérisé en ce que** l'organe élastique (**32**) est indépendant du boîtier (**12**) et interposé entre le boîtier (**12**) et la première roue d'engrenage (**24**).

5. Actionneur selon la revendication **4**, **caractérisé en ce que** l'organe élastique (**32**) est un ressort à fil.

6. Actionneur selon la revendication **5**, **caractérisé en ce que** l'organe élastique est un ressort à fil hélicoïdal de traction ou de compression.

7. Actionneur selon l'une des revendications **3** à **6**, **caractérisé en ce que** la denture axiale (**28**) est comprise dans une zone annulaire de la première roue d'engrenage (**24**) qui s'étend, par rapport à l'axe de rotation (**A2**) de la première roue d'engrenage (**24**), entre un diamètre intérieur (**Dint**) et un diamètre extérieur (**Dext**), et **en ce que** l'organe élastique (**32**) est en appui contre la première roue d'engrenage (**24**) dans une zone centrale d'appui comprise à l'intérieur du diamètre intérieur (**Dint**).

8. Actionneur selon la revendication **7**, **caractérisé en ce que** la zone centrale d'appui est comprise à l'intérieur d'un diamètre central inférieur à la moitié du diamètre intérieur (**Dint**).

9. Actionneur selon l'une des revendications **3** à **8**, **caractérisé en ce que** l'organe élastique est en appui contre la première roue d'engrenage avec interposition d'au moins une pièce intermédiaire.

10. Actionneur selon la revendication **2**, **caractérisé en ce que** l'actionneur (**10**) comporte une deuxième roue d'engrenage (**42'**) :
- qui est coaxiale (**A2**) à la première roue d'engrenage (**24**) ;
- qui présente une denture cylindrique hélicoïdale (**44'**) formée de dents d'engrenage ayant une extension pied-tête selon des directions perpendiculaires à la direction de l'axe de rotation (**A2**) de la première roue d'engrenage et ayant une extension latérale selon des lignes hélicoïdales enroulées selon un angle d'hélice autour de l'axe de rotation (**A2**) de la première roue d'engrenage ;
- qui s'engrène avec une troisième roue d'engrenage (**46'**) à denture cylindrique hélicoïdale (**48'**) ;
**en ce que en ce que** la première (**24**) et la deuxième roue d'engrenage (**42'**) sont solidaires l'une de l'autre en rotation autour de leur axe commun (**A2**) et en translation selon de leur axe commun (**A2**) ;
**en ce que** la première (**24**), la deuxième (**42'**) et la troisième roue d'engrenage (**46'**) appartiennent à une cascade d'engrenage,
et **en ce que** l'organe élastique (**50**) du moyen de placage délivre un effort de rappel angulaire à au moins une roue de ladite cascade d'engrenage autour de l'axe de ladite roue d'engrenage à laquelle l'effort de rappel angulaire est appliquée, le sens de l'effort de rappel et le sens de l'angle d'hélice de la denture (**42'**) de la deuxième roue d'engrenage étant choisis pour que l'effort de rappel angulaire génère, sur la première roue d'engrenage (**24**), une force de plaquage axiale en direction du pignon de sortie (**22**) du moteur électrique (**16**).

11. Actionneur selon la revendication **10**, **caractérisé en ce que** l'organe élastique à action angulaire (**50**) est un ressort à fil.

12. Actionneur selon l'une quelconque des revendications précédentes, **caractérisé en ce que** le moteur électrique (**16**) et la première roue d'engrenage (**24**) sont liés et positionnés chacun de manière indépendante par rapport au boîtier (**12**) de l'actionneur (**10**).

## Patentansprüche

1. Aktuator für ein Organ eines Landkraftfahrzeugs vom Typ, der ein Aktuatorgehäuse (12) beinhaltet, das ein Innenvolumen abgrenzt, in dem angeordnet sind:
- mindestens ein Elektromotor (16), der eine Motorwelle (20) aufweist, an der ein Abtriebsritzel (22) montiert ist, das drehfest mit der Motorwelle ist, wobei die Motorwelle eine Drehachse (A1) aufweist,
- und ein inneres mechanisches Getriebe (18), das mindestens ein erstes Zahnrad (24) umfasst, das eine Drehachse (A2) senkrecht zur Drehachse (A1) der Motorwelle (20) aufweist und das mit dem Abtriebsritzel (22) des Elektromotors (16) ineinandergreift, um eine Bewegung des Abtriebsritzels (22) des Elektromotors (16) auf ein Abtriebsorgan (26) des Aktuators (10) zu übertragen,
wobei das erste Zahnrad (24) eine sogenannte axiale Verzahnung (28) aufweist, die aus Zahnradzähnen gebildet ist, die eine Ausdehnung von Fuß bis Kopf entlang der Richtung der Drehachse (A2) des ersten Zahnrads (24) aufweist und die mit dem Abtriebsritzel (22) des Elektromotors (16) ineinandergreift, **dadurch gekennzeichnet, dass** das Aktuatorgehäuse (12) durch Spritzgießen aus thermoplastischem Polymermaterial hergestellt ist, dadurch, dass das erste Zahnrad (24) in dem Gehäuse (12) drehbar mit einer Translationslaxität entlang der Richtung entlang seiner Drehachse (A2) geführt wird, und dadurch, dass der Aktuator (10) mindestens ein elastisches Drückmittel (32, 36, 38, 40, 50, 44', 48') beinhaltet, welches das erste Zahnrad (24) entlang der Richtung seiner Drehachse (A2) beansprucht und das die axiale Verzahnung (28) des ersten Zahnrads (24) gegen das Abtriebsritzel (22) des Elektromotors (16) drückt.

2. Aktuator nach Anspruch 1, **dadurch gekennzeichnet, dass** das elastische Drückmittel ein elastisches Organ (32, 36, 38, 40, 50) beinhaltet.

3. Aktuator nach Anspruch 2, **dadurch gekennzeichnet, dass** das elastische Drückmittel ein Drückmittel ist, dessen elastisches Organ (32, 36, 38, 40) eine axiale Rückstellkraft liefert, die entlang der Richtung der Drehachse (A2) des ersten Zahnrads (24) gerichtet ist.

4. Aktuator nach Anspruch 3, **dadurch gekennzeichnet, dass** das elastische Organ (32) unabhängig von dem Gehäuse (12) ist und zwischen dem Gehäuse (12) und dem ersten Zahnrad (24) zwischengelegt ist.

5. Aktuator nach Anspruch 4, **dadurch gekennzeichnet, dass** das elastische Organ (32) eine Drahtfeder ist.

6. Aktuator nach Anspruch 5, **dadurch gekennzeichnet, dass** das elastische Organ eine Schraubendruck- oder -zugfeder ist.

7. Aktuator nach einem der Ansprüche 3 bis 6, **dadurch gekennzeichnet, dass** die axiale Verzahnung (28) in einer ringförmigen Zone des ersten Zahnrads (24) enthalten ist, die sich in Bezug auf die Drehachse (A2) des ersten Zahnrads (24) zwischen einem Innendurchmesser (Dint) und einem Außendurchmesser (Dext) erstreckt, und dadurch, dass das elastische Organ (32) gegen das erste Zahnrad (24) in einer zentralen Auflagezone, die im Inneren des Innendurchmessers (Dint) enthalten ist, in Auflage ist.

8. Aktuator nach Anspruch 7, **dadurch gekennzeichnet, dass** die zentrale Auflagezone innerhalb eines zentralen Durchmessers enthalten ist, der kleiner als die Hälfte des Innendurchmessers (Dint) ist.

9. Aktuator nach einem der Ansprüche 3 bis 8, **dadurch gekennzeichnet, dass** das elastische Organ unter Zwischenlegung mindestens eines Zwischenteils gegen das erste Zahnrad in Auflage ist.

10. Aktuator nach Anspruch 2, **dadurch gekennzeichnet, dass** der Aktuator (10) ein zweites Zahnrad (42') beinhaltet:
- das koaxial (A2) zum ersten Zahnrad (24) ist,
- das eine zylindrische Schraubenverzahnung (44') aufweist, die aus Zahnradzähnen gebildet ist, die eine Ausdehnung von Fuß bis Kopf entlang Richtungen senkrecht zur Richtung der Drehachse (A2) des ersten Zahnrads aufweist und eine seitliche Ausdehnung entlang schraubenförmigen Linien aufweist, die sich spiralförmig entlang einem Schrägungswinkel um die Drehachse (A2) des ersten Zahnrads drehen,
- das mit einem dritten Zahnrad (46') mit zylindrischer Schraubenverzahnung (48') ineinandergreift,
und dadurch, dass das erste (24) und das zweite Zahnrad (42') miteinander um ihre gemeinsame Achse (A2) und translatorisch entlang ihrer gemeinsamen Achse (A2) drehfest sind,
dadurch, dass das erste (24), das zweite (42') und das dritte Zahnrad (46') zu einer Zahnradkaskade gehören,
und dadurch, dass das elastische Organ (50) des Drückmittels eine Rückstellkraft liefert, die winklig zu mindestens einem Rad der Zahnradkaskade um die Achse des Zahnrads herum ist, auf das die winklige Rückstellkraft angewandt wird, wobei der Sinn der Rückstellkraft und der Sinn des Schrägungswinkels der Verzahnung (42') des zweiten Zahnrads so gewählt sind, dass die winklige Rückstellkraft auf dem ersten Zahnrad (24) eine axiale Drückkraft in Richtung des Abtriebsritzels (22) des Elektromotors (16) erzeugt.

11. Aktuator nach Anspruch 10, **dadurch gekennzeichnet, dass** das elastische Organ mit Winkelwirkung (50) eine Drahtfeder ist.

12. Aktuator nach einem der vorhergehenden Ansprüche, **dadurch gekennzeichnet, dass** der Elektromotor (16) und das erste Zahnrad (24) jeweils auf unabhängige Weise in Bezug auf das Gehäuse (12) des Aktuators (10) verbunden und positioniert sind.

## Claims

1. An actuator for a component of a land motor vehicle, of the type including an actuator casing (**12**) which delimits an internal volume in which are arranged:
- at least one electric motor (**16**) having a drive shaft (**20**) on which is mounted an output pinion (**22**) secured in rotation to the drive shaft, the drive shaft having an axis of rotation (**A1**),
- and an internal mechanical transmission (**18**) comprising at least a first gear wheel (**24**), which has an axis of rotation (**A2**) perpendicular to the axis of rotation (**A1**) of the drive shaft (**20**), and which is meshed with the output pinion (**22**) of the electric motor (**16**) to transmit a movement of the output pinion (**22**) of the electric motor (**16**) to an output member (**26**) of the actuator (**10**),
the first gear wheel (**24**) having a toothing (**28**), called axial toothing, which is formed of gear teeth having a bottom-top extension according to the direction of the axis of rotation (**A2**) of the first gear wheel (**24**), and which meshes with the output pinion (**22**) of the electric motor (**16**), **characterized in that** the actuator casing (**12**) is made by injection molding of thermoplastic polymer material, **in that** the first gear wheel (**24**) is guided in rotation in the casing (**12**) with a translational laxity according to the direction of its axis of rotation (**A2**), and **in that** the actuator (**10**) includes at least one elastic pressing means (**32**, **36**, **38**, **40**, **50**, **44'**, **48'**) which urges the first gear wheel (**24**) according to the direction of its axis of rotation (**A2**) and which presses the axial toothing (**28**) of the first gear wheel (**24**) against the output pinion (**22**) of the electric motor (**16**).

2. The actuator according to claim **1**, **characterized in that** the elastic pressing means includes an elastic member (**32**, **36**, **38**, **40**, **50**).

3. The actuator according to claim **2**, **characterized in that** the elastic pressing means is a pressing means whose elastic member (**32**, **36**, **38**, **40**) delivers an axial return force, directed according to the direction of the axis of rotation (**A2**) of the first gear wheel (**24**).

4. The actuator according to claim **3**, **characterized in that** the elastic member (**32**) is independent of the casing (**12**) and interposed between the casing (**12**) and the first gear wheel (**24**).

5. The actuator according to claim **4**, **characterized in that** the elastic member (**32**) is a wired spring.

6. The actuator according to claim **5**, **characterized in that** the elastic member is a tension or compression helically-wired spring.

7. The actuator according to any of claims **3** to **6**, **characterized in that** the axial toothing (**28**) is comprised in an annular area of the first gear wheel (**24**) which extends, with respect to the axis of rotation (**A2**) of the first gear wheel (**24**), between an internal diameter (**Dint**) and an external diameter (**Dext**), and **in that** the elastic member (**32**) is bearing against the first gear wheel (**24**) in a central bearing area comprised inside the internal diameter (**Dint**).

8. The actuator according to claim **7**, **characterized in that** the central bearing area is comprised inside a central diameter less than half the internal diameter (**Dint**).

9. The actuator according to any of claims **3** to **8**, **characterized in that** the elastic member is bearing against the first gear wheel with the interposition of at least one intermediate part.

10. The actuator according to claim **2**, **characterized in that** the actuator (**10**) includes a second gear wheel (**42'**):
- which is coaxial (**A2**) with the first gear wheel (**24**);
- which has a helical cylindrical toothing (**44'**) formed of gear teeth having a bottom-top extension according to directions perpendicular to the direction of the axis of rotation (**A2**) of the first gear wheel and having a lateral extension along helical lines wound at a helix angle about the axis of rotation (**A2**) of the first gear wheel;
- which meshes with a third gear wheel (**46'**) with helical cylindrical toothing (**48'**);
**in that** the first (**24**) and second (**42'**) gear wheels are secured to each other in rotation about their common axis (**A2**) and in translation along their common axis (**A2**);
**in that** the first (**24**), second (**42'**) and third (**46'**) gear wheels belong to a gear cascade,
and **in that** the elastic member (**50**) of the pressing means delivers an angular return force to at least one wheel of said gear cascade about the axis of said gear wheel to which the angular return force is applied, the direction of the return force and the direction of the helix angle of the toothing (**42'**) of the second gear wheel being chosen so that the angular return force generates, on the first gear wheel (**24**), an axial pressing force towards the output pinion (**22**) of the electric motor (**16**).

11. The actuator according to claim **10**, **characterized in that** the angularly acting elastic member (**50**) is a wired spring.

12. The actuator according to any one of the preceding claims, **characterized in that** the electric motor (**16**) and the first gear wheel (**24**) are each connected and positioned independently with respect to the casing (**12**) of the actuator (**10**).
